# FASCICULE DE BREVET EUROPEEN

(11) **EP 3 781 724 B1**
(45) Date de publication et mention de la délivrance du brevet: **09.10.2024**
(21) Numéro de dépôt: 19728480.5
(22) Date de dépôt: 19.04.2019
(51) Int. Cl.: C23F 1/04, B22C 9/10, B22C 9/24, F01D 9/04, B23P 15/02

(54) **PROCEDE DE FABRICATION D'UN ELEMENT AUBAGE METALLIQUE POUR UNE TURBOMACHINE D'AERONEF**
VERFAHREN ZUR HERSTELLUNG EINES METALLBESCHAUFELUNGSELEMENTS FÜR EINE TURBOMASCHINE EINES FLUGZEUGS
METHOD FOR PRODUCING A METAL BLADED ELEMENT FOR A TURBOMACHINE OF AN AIRCRAFT

(30) Priorité: 19.04.2018 FR 1853476
(43) Date de publication de la demande: 24.02.2021
(73) Titulaire: SAFRAN AIRCRAFT ENGINES, 75015 Paris (FR); SAFRAN, 75015 Paris (FR)
(72) Inventeur: SOISSON, Marc, 77550 MOISSY-CRAMAYEL (FR); BOUKERMA, Saïd, 77550 MOISSY-CRAMAYEL (FR); LISOWSKI, Janusz, 77550 MOISSY-CRAMAYEL (FR); GIMEL, Alexandre, 77550 MOISSY-CRAMAYEL (FR); SABOUNDJI, Amar, 77550 MOISSY-CRAMAYEL (FR)
(74) Mandataire: Gevers & Orès
(86) Numéro de dépôt international: PCT/FR2019/050948
(87) Numéro de publication internationale: WO 2019/202281

(56) Documents cités:
- EP-A2- 1 239 059
- FR-A1- 2 985 925
- FR-A1- 2 991 612

## Description

### DOMAINE TECHNIQUE

La présente invention se rapporte au domaine général de la fabrication des éléments aubagés métalliques pour une turbomachine d'aéronef, ces éléments aubagés pouvant être des éléments de stator ou de rotor.

### ÉTAT DE LA TECHNIQUE

Un élément aubagé de turbomachine comprend une ou plusieurs pales. Une aube de rotor, telle qu'une aube mobile de turbine, comprend par exemple une seule pale qui est reliée à un pied destiné à être emmanché dans une alvéole de forme complémentaire d'un disque de rotor. Un distributeur de turbine comprend par exemple plusieurs pales qui s'étendent entre des plateformes interne et externe.

La fabrication d'un élément aubagé par fonderie à la cire perdue est une technique bien connue dans le domaine aéronautique. Une telle technique est par exemple décrite dans les documents FR-A1 -2 985 924 et FR-A1- 2 991 612. Un procédé d'usinage chimique d'un élément aubagé métallique est décrit dans le document EP-A2- 1 239 059. Pour rappel, la fonderie à la cire perdue consiste à réaliser en cire, par injection dans un moule, un modèle de chacun des éléments aubagés désirés. L'assemblage de ces modèles sur des bras de coulée également en cire, eux-mêmes raccordés à un distributeur de métal en cire, permet de constituer une grappe qui est ensuite plongée dans différentes substances afin de former autour de celle-ci une carapace de céramique d'épaisseur sensiblement uniforme. Le procédé est poursuivi en faisant fondre la cire, qui laisse alors son empreinte exacte dans la céramique, dans laquelle le métal en fusion est versé, via un godet de coulée assemblé sur le distributeur de métal. Après refroidissement du métal, la carapace est détruite et les pièces en métal sont séparées et parachevées. Cette technique offre l'avantage d'une précision dimensionnelle ainsi qu'un très bon aspect de surface.

Une des difficultés de cette technique concerne toutefois l'obtention de profil fin et plus particulièrement de bord de fuite fin. Une pale présente un profil aérodynamique et comporte un intrados et un extrados s'étendant entre des bords d'attaque et de fuite des gaz dans la turbomachine. Le bord de fuite d'une pale est idéalement le plus fin possible pour limiter les perturbations aérodynamiques du flux de gaz en aval de l'aube.

Cependant, même si la fonderie à la cire perdue permet d'obtenir des éléments aubagés à des cotes précises, cette technique ne permet pas d'obtenir de très petites cotes et donc de réaliser des bords de fuite suffisamment fins en particulier pour les éléments aubagés de petites dimensions.

La présente invention propose une solution simple, efficace et économique à ce problème.

### EXPOSÉ DE L'INVENTION

La présente invention propose un procédé de fabrication d'un élément aubagé métallique pour une turbomachine d'aéronef, cet élément aubagé comportant au moins une pale comportant un intrados et un extrados s'étendant entre un bord d'attaque et un bord de fuite de la pale, le bord de fuite devant avoir une épaisseur X1, le procédé comportant les étapes de :
a) fabrication de l'élément aubagé par fonderie à la cire perdue, le bord de fuite présentant une épaisseur X2 lors de l'étape a), et
b) finition de l'élément aubagé,
caractérisé en ce que l'étape b) comprend l'usinage chimique au moins du bord de fuite de la ou de chaque pale de façon à obtenir ladite épaisseur X1 qui ne peut être obtenue directement par l'étape a), l'épaisseur X1 étant inférieure à l'épaisseur X2.

Comme évoqué dans ce qui précède, la fonderie à la cire perdue permet d'obtenir un élément aubagé avec des dimensions précises. Cependant, elle permet d'avoir une cote minimale d'épaisseur de matière noté X2, qui est supérieure à X1. Le but recherché est de réaliser l'élément aubagé avec un bord de fuite d'épaisseur X1, c'est-à-dire plus fin que celui (d'épaisseur X2) qui pourrait être obtenu directement par la fonderie à la cire perdue. Ceci est rendu possible selon l'invention par l'usinage chimique de ce bord de fuite, l'usinage chimique permettant d'enlever une quantité de matière en surface suffisante pour passer de X2 à X1.

Dans la présente demande, on distingue une « attaque chimique » d'un « usinage chimique ». Une attaque chimique est réalisée sur une pièce lors d'une opération de contrôle de santé matière. L'attaque chimique permet de mettre à nus des grains de matière en surface de la pièce (en supprimant les joints de grains), ces grains étant ensuite contrôlés pour déterminer la santé matière de la pièce. Dans le cas présent, l'usinage chimique est utilisé pour enlever de la matière et en particulier une épaisseur de matière en surface d'un élément aubagé. L'usinage a donc pour but de retirer la matière entre les grains de matière mais aussi les grains eux-mêmes, jusqu'à obtenir une suppression de matière d'épaisseur souhaitée. Les paramètres et les conditions de l'usinage chimique sont donc tels qu'ils permettent de retirer une épaisseur souhaitée de matière.

Le procédé selon l'invention peut comprendre une ou plusieurs des caractéristiques et/ou étapes ci-dessous, prises isolément les unes des autres ou en combinaison les unes avec les autres :
- l'épaisseur X1 est inférieure à 1mm, de préférence inférieure ou égale à 0,5mm et plus préférentiellement comprise entre 0,2 et 0,45mm,
   -- l'épaisseur X1 est mesurée selon une direction transverse à l'élément aubagé,
- l'usinage chimique retire une épaisseur de matière en surface comprise entre 0,05 et 0,5 mm, et plus préférentiellement entre 0,05 et 0,15 mm,
   -- l'épaisseur de matière comprend des grains et des joints de matière,
- l'élément aubagé est réalisé en alliage métallique à base nickel, cobalt ou chrome,
- le procédé comprend au moins une étape postérieure choisie parmi : une étape de contrôle santé matière, une étape de contrôle dimensionnel final, une étape de surfaçage par tribofinition,
- l'usinage chimique est réalisé en plongeant l'élément aubagé dans un bain d'usinage chimique,
- l'élément aubagé est partiellement plongé dans le bain, l'élément aubagé pouvant comprendre des zones masquées pour ne pas qu'elles soient usinées au contact du bain,
- l'élément aubagé est plongé entièrement dans le bain, l'élément aubagé pouvant comprendre des zones masquées pour ne pas qu'elles soient usinées au contact du bain,
- l'élément aubagé est plongé dans le bain pendant une durée comprise entre 10 et 300 min, la température du bain étant comprise entre 20 et 70°C,
- le bain est à base aqueuse et comprend HCl à une concentration comprise entre 25 et 300 g/L, le bain pouvant en outre comprendre au moins un autre des composants suivants :
   - FeCl₃ à une concentration comprise entre 100 et 500g/L,
   - HNO₃ à une concentration comprise entre 10 et 40 g/L,
   - H₂O₂ à une concentration compris entre 100 et 200 ml/L.
- l'étape b) comprend une étape préalable d'attaque chimique d'au moins une partie de l'élément aubagé,
- l'attaque chimique est réalisée en plongeant l'élément aubagé dans un bain d'attaque chimique,
- les bains d'attaque et d'usinage chimique sont identiques, l'attaque et l'usinage chimique différents l'un de l'autre au moins par la durée d'immersion de l'élément aubagé dans le bain.

### BRÈVE DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue schématique en perspective d'un élément aubagé d'une turbomachine,
- la figure 2 est une vue schématique en coupe d'une pale d'un élément aubagé de turbomachine,
- la figure 3 est un schéma bloc montrant des étapes d'un procédé de fabrication d'un élément aubagé par fonderie à la cire perdue,
- la figure 4 est une vue très schématique en perspective d'une cuve de bain d'usinage chimique dans laquelle sont entièrement plongés des éléments aubagés, et illustre une étape d'un procédé selon l'invention,
- la figure 5 est une vue très schématique en perspective d'une cuve de bain d'usinage chimique dans laquelle sont partiellement plongés des éléments aubagés, et illustre une variante de réalisation d'une étape d'un procédé selon l'invention,
- la figure 6 est une vue similaire à celle de la figure 3 et représente un enlèvement de matière par usinage chimique, et
- la figure 7 est un schéma bloc montrant des étapes d'un procédé de fabrication selon l'invention.

### DESCRIPTION DETAILLÉE D'UN MODE DE RÉALISATION

L'invention s'applique à un élément aubagé qui est par exemple une aube, un redresseur, un distributeur, une aube mobile, etc., d'une turbomachine d'aéronef.

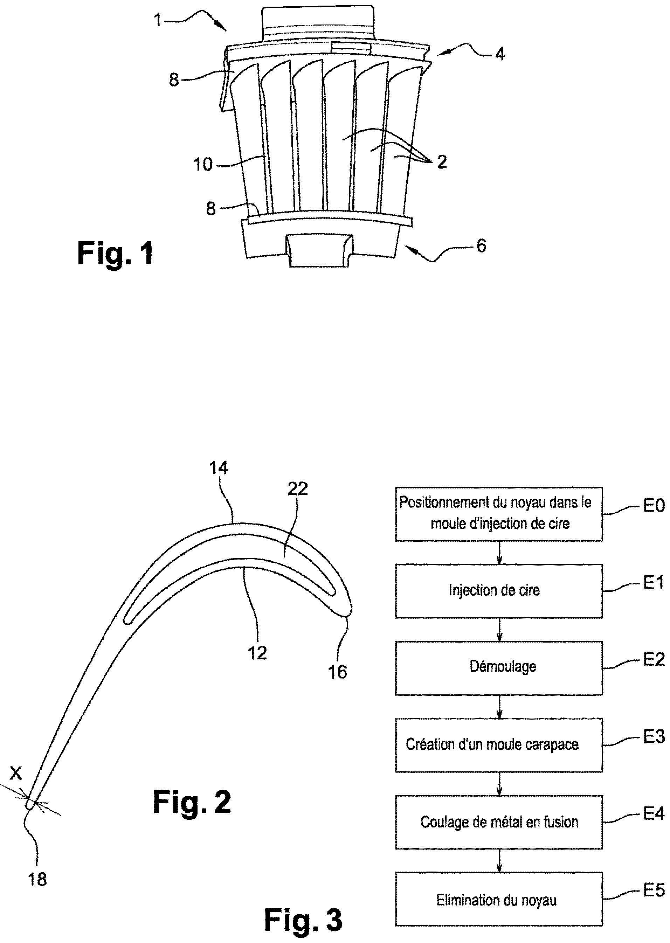

La figure 1 illustre un distributeur 1 de turbine d'une turbomachine et plus particulièrement un secteur de ce distributeur qui est annulaire et sectorisé et comprend donc plusieurs secteurs disposés circonférentiellement bout à bout autour d'un axe qui est l'axe longitudinal de la turbomachine.

Ce secteur comprend une pluralité de pales 2 agencées entre une première extrémité 4 et une seconde extrémité 6. Les deux extrémités 4, 6 forment respectivement un secteur angulaire de couronne extérieure et un secteur angulaire de couronne intérieure, et comprennent chacune une plateforme 8 délimitant une veine principale 10 de circulation des gaz. En plus de la plateforme 8 à laquelle est attachée une fonction aérodynamique, chaque extrémité comporte également une structure classique permettant le montage de cet élément aubagé sur un module de turbomachine, ici un module de turbine.

Chaque pale 2 a un profil aérodynamique visible à la figure 2 et comprend un intrados 12 et un extrados 14 qui s'étendent entre des bords 16, 18, respectivement amont ou d'attaque des gaz, et aval ou de fuite des gaz, qui s'écoulent dans la veine 10. On constate que la partie la plus fine, c'est-à-dire celle de plus faible épaisseur (épaisseur X), est celle située au niveau et le long du bord de fuite 18 de la pale 2. L'épaisseur X est mesurée selon une direction transverse à la pale.

La figure 2 permet également de constater que la pale 2 est ici creuse et comprend une cavité 22 ménagée dans le centre de la pièce de sorte à alléger la masse de l'aube et donc globalement de la turbine et/ou permettre la circulation de gaz radialement vers l'intérieur du moteur afin de refroidir la pièce.

L'invention vise à fabriquer le secteur de distributeur 1, et plus globalement tout élément aubagé de turbomachine, par un procédé fabrication comportant une étape de fonderie à la cire perdue, dont des étapes sont représentées à la figure 3.

L'étape de fonderie à la cire perdue peut comprendre plusieurs sous-étapes dont une sous-étape préliminaire E0 lors de laquelle un noyau, par exemple en céramique, est positionné dans un moule d'injection de résine. Ce moule a une forme correspondant à celle de la cavité 22 à former. Dans le cas où plusieurs pales sont fabriquées simultanément, ce qui est le cas avec un secteur de distributeur, plusieurs noyaux sont positionnés dans un même moule de réalisation de ce distributeur.

Le moule est ensuite fermé puis de la cire est injectée lors d'une sous-étape E1, la cire enrobant notamment les noyaux, pour la réalisation du modèle cire du secteur de distributeur à fabriquer.

Après refroidissement et solidification, une sous-étape E2 de démoulage du modèle cire a lieu. La sous-étape suivante E3 comprend la réalisation d'un moule dit « carapace » en matière céramique, autour du modèle cire et dans lequel du métal en fusion est coulé lors d'une sous-étape E4.

La cire est éliminée avant ou lors de la coulée du métal en fusion et les évidements ainsi ménagés entre les noyaux et le moule carapace sont remplis par le métal en fusion pour former le secteur de distributeur, les parties pleines du noyau devenant quant à elles des cavités après élimination du noyau céramique lors d'une sous-étape E5. Les pièces peuvent être obtenues par coulée équiaxe ou par solidification dirigée.

Le procédé selon l'invention comprend une étape supplémentaire de finition de l'élément aubagé comportant son usinage chimique au moins partiel. L'usinage chimique consiste ici à utiliser une substance chimique pour usiner la matière par dissolution, c'est-à-dire pour enlever une quantité déterminée de matière. En pratique, l'usinage chimique peut être réalisé en plongeant l'élément aubagé dans un bain chimique dans des conditions appropriées pour obtenir le résultat recherché qui est un enlèvement de matière en surface et un amincissement au moins local de l'élément aubagé.

Comme évoqué dans ce qui précède, la fonderie à la cire perdue permet de fabriquer des éléments aubagés avec des cotes précises mais ne permet pas d'avoir des épaisseurs très fines, par exemple inférieures à 1mm, et plus particulièrement inférieures ou égales à 0,5mm. Cette limite inférieure d'épaisseur, qui peut être obtenue par la fonderie à la cire perdue, est notée X2.

On comprend dès lors que l'épaisseur minimale du bord de fuite 18 d'une pale, qui peut être obtenue grâce à la fonderie par cire perdue, est X2. L'épaisseur X2 correspond à l'épaisseur considérée du brut de fonderie.

Pour réduire cette épaisseur jusqu'à une valeur souhaitée, notée X1, l'invention utilise l'usinage chimique. Le bord de fuite de la pale est donc usiné chimiquement pour réduire son épaisseur de X2 à X1, par enlèvement chimique de matière. X1 est par exemple inférieure à 1mm, de préférence inférieure ou égale à 0,5mm et plus préférentiellement comprise entre 0,2 et 0,45mm.

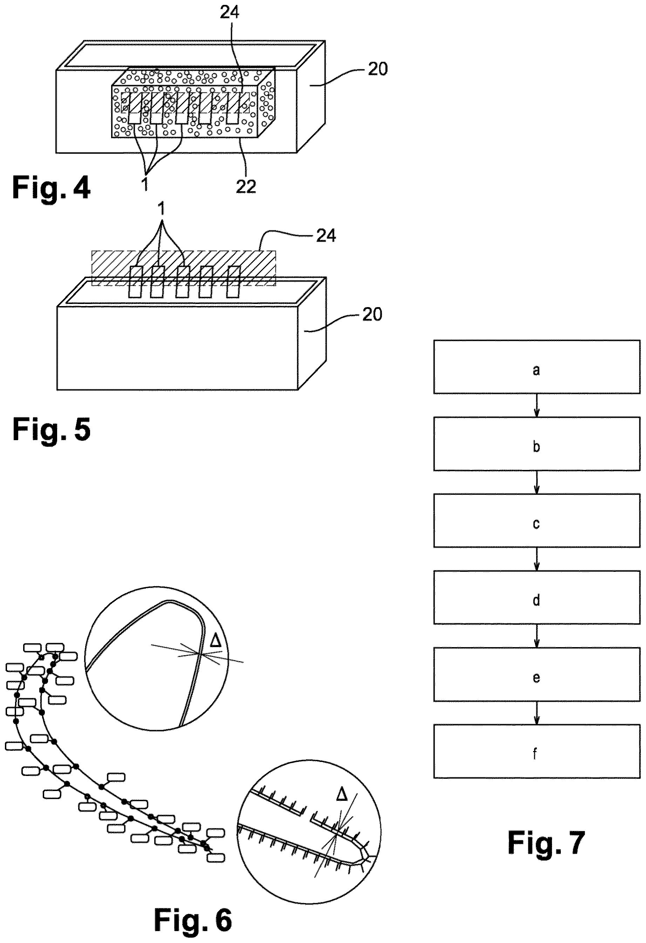

Les figures 4 et 5 illustrent deux exemples de mise en oeuvre de cette étape d'usinage chimique, dans laquelle l'élément aubagé est plongé dans un bain d'usinage chimique.

En pratique, il est plus efficace d'usiner simultanément plusieurs pièces. On peut donc prévoir une cuve 20 contenant un bain d'usinage chimique et apte à accueillir plusieurs éléments aubagés simultanément. Les éléments aubagés, tels que des distributeurs 1, peuvent être positionnés au fond d'une passoire 22, c'est-à-dire d'un récipient percé d'une multitude de trous. La passoire 22 ainsi que les éléments aubagés sont entièrement immergés dans le bain de la cuve, et le bain vient au contact des éléments aubagés en passant à travers les trous de la passoire 22.

Ceci permet d'usiner chimiquement toutes les surfaces des éléments aubagés qui sont au contact du bain, et donc notamment les intrados 12 et les extrados 14 ainsi que les bords d'attaque 16 et de fuite 18 des pales 2. Si un usinage localisé est seulement recherché, en particulier au niveau du bord d'attaque pour en réduire l'épaisseur, il est possible d'utiliser un ou plusieurs masques 24 sur les éléments aubagés. Ces masques 24 sont destinés à protéger des surfaces des éléments aubagés du bain, et donc de ne pas les soumettre à l'usinage chimique. Les masques 24 sont ici schématiquement représentés par un rectangle en traits pointillés et hachuré.

La figure 5 illustre une variante de réalisation dans laquelle les éléments aubagés sont plongés seulement partiellement dans le bain de la cuve. Dans ce cas, les masques 24 ne sont pas forcément nécessaires sauf à protéger des surfaces qui doivent être immergées du fait de la conformation des pièces, pour obtenir l'usinage chimique localisé souhaité.

La figure 6 illustre de manière schématique l'enlèvement de matière Δ qui peut être envisagé à la surface de la pale d'un élément aubagé. L'usinage chimique retire par exemple une épaisseur de matière en surface comprise entre 0,05 et 0,5mm, et plus préférentiellement entre 0,05 et 0,15 mm, dans les zones où un usinage chimique a effectivement lieu.

La figure 7 illustre plusieurs étapes d'un mode de réalisation du procédé selon l'invention.

La première étape a) est la réalisation de l'élément aubagé par fonderie à la cire perdue. Parmi les étapes suivantes, il y a la finition de l'élément aubagé et en particulier sa mise aux cotes finales. Cette étape de finition b) comprend l'usinage chimique de l'élément aubagé. Après ou (de préférence) avant cet usinage chimique, le procédé peut comprendre une étape c) de contrôle santé matière. Cette étape peut comprendre le contrôle macrographique des grains de matière, un contrôle par ressuage, un contrôle radiographique, un contrôle visuel, etc., et peut comprendre une sous-étape préliminaire d'attaque chimique lors de laquelle des joints inter-grains sont retirés par dissolution chimique, comme évoqué dans ce qui précède. Les bains d'attaque chimique peuvent être similaires aux bains d'usinage chimique mais la durée d'immersion est en général différente selon que la dissolution des joints seulement (pour l'attaque chimique), ou des joints et des grains (pour l'usinage chimique), est recherchée. La durée d'immersion dans un bain d'usinage chimique est par exemple au moins 3 fois supérieure, et de préférence au moins 9 fois supérieure, à la durée d'immersion dans un bain d'attaque chimique.

Le fait de réaliser l'usinage chimique permet de ne pas modifier la gamme classique de production de l'élément aubagé. Il est possible de coupler l'attaque chimique et l'usinage chimique permettant ainsi d'optimiser la gamme de production en gagnant du temps et donc de restreindre les coûts. Il n'y a ainsi pas de multiplication des étapes comme avec un usinage classique.

L'usinage chimique peut être complété par un usinage électrolytique (étape d)) pour améliorer l'état de surface de l'élément aubagé. Cette étape additionnelle d'usinage peut consister à tremper totalement ou partiellement l'élément aubagé dans un bain électrolytique comportant par exemple un ou plusieurs des réactifs suivants : acide nitrique, acide acétique, acide sulfurique et acide phosphorique.

Après l'usinage chimique voire électrolytique, le procédé peut comprendre une étape e) de contrôle dimensionnel final et/ou une étape f) de surfaçage par tribofinition. Cette dernière étape, qui n'est pas forcément nécessaire si le procédé comprend l'étape d), permet d'améliorer l'état de surface de l'élément aubagé, et permet par exemple d'obtenir des rugosités comprises entre 1 et 5µm, et de préférence entre 1,6 et 3,5µm.

**L'invention** s'applique notamment mais non exclusivement à la fabrication d'éléments aubagés en alliage métallique à base Nickel (R125, R77, INCO718, Monocristaux, DS200, ...), à base Chrome, ou à base Cobalt (MARM509, ...).

**Les** tables 1 à 3 ci-dessous illustrent des exemples de compositions de bain chimique pour la mise en oeuvre de l'étape d'usinage chimique. Dans chaque table, la colonne de gauche liste plusieurs exemples d'alliages métalliques et les colonnes suivantes illustrent d'une part, les paramètres de durée (temps (Tps) en minutes) d'immersion de l'élément aubagé dans le bain, et de température (Temp.) du bain, et d'autre part les composants chimiques de ce bain.

Chaque bain est à base aqueuse et comprend de l'acide chlorhydrique (HCl) à une concentration comprise entre 25 et 300 g/L, le bain pouvant en outre comprendre au moins un autre des composants suivants :
- FeCl₃ (chlorure de fer) à une concentration comprise entre 100 et 500g/L,
- HNO₃ (acide nitrique) à une concentration comprise entre 10 et 40 g/L,
- H₂O₂ (peroxyde d'hydrogène) à une concentration compris entre 100 et 200 ml/L. Le reste du bain est de l'eau en quantité suffisante équivalente pour 1L.

Plus spécifiquement, la table 1 comprend des exemples de compositions de bains dans lesquelles HCl est essentiellement associé à FeCl₃. La table 2 comprend des exemples de compositions de bains dans lesquelles HCl est essentiellement associé à FeCl₃ et HNO₃. La table 3 comprend des exemples de compositions de bains dans lesquelles HCl est essentiellement associé à H₂O₂. Selon d'autres variantes, le bain pourrait comprendre une association de HCL et HNO₃, ou uniquement de l'acide fluonitrique HF - HNO₃.

**Table 1**

| | Usinage chimique (min/max) | | | | |
|---|---|---|---|---|---|
| | Tps (min) | Temp (°C) | FeCl₃ (g/l) | HCl(g/l) | Eau (g/l) |
| AM1 et autres alliages monocristallins sans (Ru et/ou Re): exemple AM1 | 80--150 | 50±20 | 300--500 | 25--45 | qsp 1l |
| R125 et autres alliages base nickel | 80--150 | 50±20 | 300--500 | 25--45 | qsp 1l |
| R77 | 10--40 | 50±20 | 300--500 | 25--45 | qsp 1l |
| DS200 et autres alliages colonnaires | 40--80 | 50±20 | 300--500 | 25--45 | qsp 1l |
| IN100 | 10--40 | 50±20 | 300--500 | 25--45 | qsp 1l |
| Alliages monocristallins avec (Ru et/ou Re) | 40--80 | 50±20 | 300--500 | 25--45 | qsp 1l |

**Table 2**

| | Usinage chimique (min/max) | | | | | |
|---|---|---|---|---|---|---|
| | Tps (min) | Temp (°C) | FeCl3 (g/l) | HCl(g/l) | HNO3 (g/l) | Eau (g/l) |
| AM1 et autres alliage monocristallins sans (Ru et/ou Re): exemple AM1 | 10---20 | 40±20 | 100--200 | 150--300 | 10--40 | qsp 1l |
| R125 et autres alliages base nickel | 10 --20 | 40±20 | 100--200 | 150--300 | 10--40 | qsp 1l |
| R77 | 1--4 | 40±20 | 100--200 | 150--300 | 10--40 | qsp 1l |
| DS200 et autres alliages colonnaires | 5--15 | 40±20 | 100--200 | 150--300 | 10--40 | qsp 1l |
| IN100 | 1--4 | 40±20 | 100--200 | 150--300 | 10--40 | qsp 1l |
| Alliage monocristallins avec (Ru et/ou Re) | 5--15 | 40±20 | 100--200 | 150--300 | 10--40 | qsp 1l |

**Table 3**

| | Usinage chimique (min/max) | | | | |
|---|---|---|---|---|---|
| | Tps (min) | Temp (°C) | H₂0₂(ml/l) | HCl(ml/l) | Eau (ml/l) |
| AM1 et autres alliage monocristallins sans (Ru et/ou Re): exemple AM1 | 200--300 | 40±20 | 100--200 | 200--300 | 400--700 |
| R125 et autres alliages base nickel | 200--300 | 40±20 | 100--200 | 200--300 | 400--700 |
| R77 | 10--40 | 40±20 | 100--200 | 200--300 | 400--700 |
| DS200 et autres alliages colonnaires | 75--250 | 40±20 | 100--200 | 200--300 | 400--700 |
| IN100 | 10--50 | 40±20 | 100--200 | 200--300 | 400--700 |
| Alliage monocristallins avec (Ru et/ou Re) | 100--200 | 40±20 | 100--200 | 200--300 | 400--700 |

On constate que la durée d'immersion dans le bain est comprise 10 et 300 min, et plus spécifiquement entre 10 et 150 min dans le cas d'un bain selon la table 1, entre 1 et 20 min dans le cas d'un bain selon la table 2, et entre 10 et 300 min dans le cas d'un bain selon la table 3.

On constate que la température du bain est comprise entre 20 et 70°C, et plus spécifiquement entre 30 et 70°C dans le cas d'un bain selon la table 1, et entre 20 et 60°C dans le cas d'un bain selon les tables 2 et 3.

On constate que la quantité de HCl varie en fonction de la présence et de la quantité des autres composants du bain ainsi que de la température et de la durée d'immersion.

L'enlèvement de matière est caractérisé par des courbes de dissolution qui dépendent par exemple du matériau, des produits chimiques mis en oeuvre, du vieillissement du bain, de la concentration du bain d'usinage chimique, de la température du bain, de l'agitation du bain, de la position de la pièce dans le bain, etc. Une fois ces paramètres figés, l'enlèvement de matière peut donc être proportionnel au nombre d'immersions et à la durée de traitement dans le bain.

## Revendications

1. Procédé de fabrication d'un élément aubagé (1) métallique pour une turbomachine d'aéronef, cet élément aubagé comportant au moins une pale (2) comportant un intrados (12) et un extrados (14) s'étendant entre un bord d'attaque (16) et un bord de fuite (18) de la pale, le bord de fuite devant avoir une épaisseur X1, le procédé comportant les étapes de :
a) fabrication de l'élément aubagé par fonderie à la cire perdue, le bord de fuite (18) présentant une épaisseur X2 lors de l'étape a), et
b) finition de l'élément aubagé,
**caractérisé en ce que** l'étape b) comprend l'usinage chimique au moins du bord de fuite de la ou de chaque pale de façon à obtenir ladite épaisseur X1 qui ne peut être obtenue directement par l'étape a), l'épaisseur X1 étant inférieure à l'épaisseur X2.

2. Procédé selon la revendication précédente, dans lequel l'épaisseur X1 est inférieure à 1mm, de préférence inférieure ou égale à 0,5mm et plus préférentiellement comprise entre 0,2 et 0,45mm.

3. Procédé selon l'une des revendications précédentes, dans lequel l'usinage chimique retire une épaisseur de matière en surface comprise entre 0,05 et 0,5 mm, et plus préférentiellement entre 0,05 et 0,15 mm.

4. Procédé selon l'une des revendications précédentes, dans lequel l'élément aubagé est réalisé en alliage métallique à base nickel, cobalt ou chrome.

5. Procédé selon la revendication précédente, dans lequel il comprend au moins une étape postérieure choisie parmi : une étape de contrôle santé matière, une étape de contrôle dimensionnel final, une étape de surfaçage par tribofinition.

6. Procédé selon l'une des revendications précédentes, dans lequel l'usinage chimique est réalisé en plongeant l'élément aubagé dans un bain d'usinage chimique.

7. Procédé selon la revendication précédente, dans lequel l'élément aubagé est partiellement plongé dans le bain, l'élément aubagé pouvant comprendre des zones masquées pour ne pas qu'elles soient usinées au contact du bain.

8. Procédé selon la revendication 6, dans lequel l'élément aubagé est plongé entièrement dans le bain, l'élément aubagé pouvant comprendre des zones masquées pour ne pas qu'elles soient usinées au contact du bain.

9. Procédé selon l'une des revendications 6 à 8, dans lequel l'élément aubagé est plongé dans le bain pendant une durée comprise entre 10 et 300 min, la température du bain étant comprise entre 20 et 70°C.

10. Procédé selon l'une des revendications 6 à 9, dans lequel le bain est à base aqueuse et comprend HCl à une concentration comprise entre 25 et 300 g/L, le bain pouvant en outre comprendre au moins un autre des composants suivants
- FeCl₃ à une concentration comprise entre 100 et 500g/L,
- HNO₃ à une concentration comprise entre 10 et 40 g/L,
- H₂O₂ à une concentration compris entre 100 et 200 ml/L.

11. Procédé selon l'une des revendications 6 à 10, dans lequel l'étape b) comprend une étape préalable d'attaque chimique d'au moins une partie de l'élément aubagé, en plongeant l'élément aubagé dans un bain d'attaque chimique.

## Patentansprüche

1. Verfahren zum Herstellen eines Metallbeschaufelungselements (1) für ein Turbotriebwerk eines Luftfahrzeugs, wobei dieses Beschaufelungselement mindestens ein Schaufelblatt (2) umfasst, das eine Druckseite (12) und eine Saugseite (14) umfasst, die sich zwischen einer Vorderkante (16) und einer Hinterkante (18) des Schaufelblatts erstrecken, wobei die Hinterkante eine Dicke X1 aufzuweisen hat, wobei das Verfahren die Schritte umfasst zum:
a) Herstellen des Beschaufelungselements durch Wachsausschmelzguss, wobei die Hinterkante (18) beim Schritt a) eine Dicke X2 aufweist, und
b) Fertigstellen des Beschaufelungselements, **dadurch gekennzeichnet, dass** der Schritt b) das chemische Bearbeiten von zumindest der Hinterkante des oder jedes Schaufelblatts umfasst, um die Dicke X1 zu erhalten, die nicht direkt durch den Schritt a) erhältlich ist, wobei die Dicke X1 geringer als die Dicke X2 ist.

2. Verfahren nach dem vorstehenden Anspruch, wobei die Dicke X1 geringer als 1 mm, vorzugsweise geringer oder gleich 0,5 mm ist, und bevorzugter zwischen 0,2 und 0,45 mm liegt.

3. Verfahren nach einem der vorstehenden Ansprüche, wobei die chemische Bearbeitung eine Materialdicke an der Oberfläche entfernt, die zwischen 0,05 und 0,5 mm, und bevorzugter zwischen 0,05 und 0,15 mm liegt.

4. Verfahren nach einem der vorstehenden Ansprüche, wobei das Beschaufelungselement aus einer Metalllegierung auf Basis von Nickel, Kobalt oder Chrom gefertigt ist.

5. Verfahren nach dem vorstehenden Anspruch, wobei es mindestens einen nachfolgenden Schritt umfasst, ausgewählt aus: einem Materialprüfungsschritt, einem Schritt zur abschließenden Dimensionsprüfung, einem Oberflächenbehandlungsschritt durch Trowalisieren.

6. Verfahren nach einem der vorstehenden Ansprüche, wobei die chemische Bearbeitung durchgeführt wird, indem das Beschaufelungselement in ein Bad zur chemischen Bearbeitung getaucht wird.

7. Verfahren nach dem vorstehenden Anspruch, wobei das Beschaufelungselement teilweise in das Bad getaucht wird, wobei das Beschaufelungselement abgedeckte Bereiche umfassen kann, um in Kontakt mit dem Bad nicht bearbeitet zu werden.

8. Verfahren nach Anspruch 6, wobei das Beschaufelungselement vollständig in das Bad getaucht wird, wobei das Beschaufelungselement abgedeckte Bereiche umfassen kann, um in Kontakt mit dem Bad nicht bearbeitet zu werden.

9. Verfahren nach einem der Ansprüche 6 bis 8, wobei das Beschaufelungselement für eine Dauer in das Bad getaucht wird, die zwischen 10 und 300 Min. liegt, wobei die Temperatur des Bades zwischen 20 und 70°C liegt.

10. Verfahren nach einem der Ansprüche 6 bis 9, wobei das Bad auf wässriger Basis ist und HCl mit einer Konzentration umfasst, die zwischen 25 und 300 g/L liegt, wobei das Bad weiter mindestens eine andere der folgenden Komponenten umfassen kann
- FeCl₃ mit einer Konzentration, die zwischen 100 und 500g/L liegt,
- HNO₃ mit einer Konzentration, die zwischen 10 und 40g/L liegt,
- H₂O₂ mit einer Konzentration, die zwischen 100 und 200 ml/L liegt.

11. Verfahren nach einem der Ansprüche 6 bis 10, wobei der Schritt b) einen vorhergehenden Schritt zum chemischen Abtragen mindestens eines Teils des Beschaufelungselements umfasst, indem das Beschaufelungselement in ein chemisches Abtragsbad getaucht wird.

## Claims

1. A method for producing a metal bladed element (1) for an aircraft turbine engine, this bladed element comprising at least one blade (2) comprising a pressure side (12) and a suction side (14) extending between a leading edge (16) and a trailing edge (18) of the blade, the trailing edge having to have a thickness X1, the method comprising the steps of:
a) producing the bladed element by lost-wax casting, the trailing edge (18) having a thickness X2 during the step a),
b) finishing the bladed element,
**characterized in that** the step b) comprises the chemical milling at least of the trailing edge of the or each blade so as to obtain said thickness X1 which cannot be directly obtained by the step a), the thickness X1 being less than the thickness X2.

2. The method according to the preceding claim, wherein the thickness X1 is less than 1mm, preferably less than or equal to 0.5mm and more preferably between 0.2 and 0.45mm.

3. The method according to one of the preceding claims, wherein the chemical milling removes a material thickness at the surface of between 0.05 and 0.5mm, and more preferably between 0.05 and 0.15mm.

4. The method according to one of the preceding claims, wherein the bladed element is made of a metal alloy based on nickel, cobalt or chromium.

5. The method according to the preceding claim, wherein it comprises at least one subsequent step selected from: a step of inspecting material health, a step of inspecting final dimensioning, a step of surfacing by tribofinishing.

6. The method according to one of the preceding claims, wherein the chemical milling is carried out by immersing the bladed element in a chemical milling bath.

7. The method according to the preceding claim, wherein the bladed element is partially immersed in the bath, wherein the bladed element may comprise masked zones so that they are not milled in contact with the bath.

8. The method according to claim 6, wherein the bladed element is fully immersed in the bath, wherein the bladed element may comprise masked zones so that they are not milled in contact with the bath.

9. The method according to one of claims 6 to 8, wherein the bladed element is immersed in the bath for a period of between 10 and 300min, the bath temperature being between 20 and 70°C.

10. The method according to one of claims 6 to 9, wherein the bath is water-based and comprises HCl in a concentration of between 25 to 300 g/L, wherein the bath may additionally comprise at least one other of the following components
- FeCl₃ at a concentration of between 100 and 500g/L,
- HNO₃ at a concentration of between 10 and 40g/L,
- H₂O₂ at a concentration of between 100 and 200ml/L.

11. The method according to one of claims 6 to 10, wherein the step b) comprises a prior step of etching at least part of the bladed element by immersing the bladed element into an etching bath.
